# EUROPEAN PATENT SPECIFICATION

(11) **EP 3 294 536 B1**
(45) Date of publication and mention of the grant of the patent: **11.09.2019**
(21) Application number: 16736911.5
(22) Date of filing: 13.05.2016
(51) Int. Cl.: B29C 73/16, B29D 30/06, C08J 11/08

(54) **TYRE SEALANT LAYER**
REIFENDICHTMITTELSCHICHT
COUCHE D'ÉTANCHÉITÉ POUR PNEU

(30) Priority: 15.05.2015 IT UB20150851
(43) Date of publication of application: 21.03.2018
(73) Proprietor: Bridgestone Corporation, Tokyo 104-8340 (JP)
(72) Inventor: AGORETTI, Pasquale, 00040 Ariccia (IT); HOUSE, John Nazareno, 00128 Roma (IT); MADAU, Francesco, 00013 Fonte Nuova (IT)
(74) Representative: Marchetti, Alessio
(86) International application number: PCT/IB2016/052790
(87) International publication number: WO 2016/185349

(56) References cited:
- FR-A1- 2 642 698
- FR-A1- 2 727 978
- US-A- 4 304 281
- US-A- 5 226 958
- US-A- 5 677 354
- US-A1- 2009 272 476

## Description

### TECHNICAL FIELD

The present invention concerns a method for preparing a tyre sealant layer and a tyre comprising said sealant layer.

### BACKGROUND ART

The use in tyres of a viscous sealant layer generally arranged in the inner cavity of the tyre in contact with the air or covered by a protective rubber or polymer layer has been known for some time. In particular, the sealant layer is generally arranged on the central zone of the surface of the inner cavity in the area of the tread strip.

The object of the sealant layer is to surround and adhere to the object that has penetrated the tread, thus preventing the outflow of air from the tyre by instant "sealing". Furthermore, if the penetrated object comes out of the tread, the material of the sealant layer will be arranged to occupy the hole left by the object sealing the same.

Part of the research into tyres concentrates on improving the effectiveness of the sealant layer with particular attention to its rheological characteristics. In fact, the viscosity of the sealant layer must guarantee both the sealing action with respect to the penetrated object and with respect to any hole as described above, and its stability in the inner cavity regardless of the static or dynamic conditions of the tyre. In this regard it is of paramount importance that the innovation of new sealant layers is able to guarantee high effectiveness both with the tyre at a standstill and with the tyre in rotation. In fact, one of the drawbacks of the known art is that of producing sealant layers the efficiency of which depends on rotation of the tyre.

The inventors of the present invention have devised a method for producing a tyre sealant layer, the performance of which is better than that of the sealant layers of the known art both with the tyre at a standstill and with the tyre in rotation.

For a correct evaluation of the present invention it should be taken into account that the huge industrial production of rubber articles necessarily causes an environmental problem deriving from their disposal at the end of their working life, for example pollution due to the accumulation of scrap tyres in landfills.

One of the possible solutions to this problem could be to recycle scrap tyre rubber for the production of new tyres. The majority of these solutions entail the use of recycled rubber in granular form identified by the term crumb rubber.

Here and below by "crumb rubber" we mean a recycled rubber with granular consistency originating from scrap tyres.

US4304281 discloses a tire having a coating of a gelled nonvolatile lubricating material disposed on at least the interior surface of the tread to facilitate relative movement between contacting portions of the interior surface of the tire when the tire is driven deflated. The coating is incapable of flowing away from the portion of the interior surface to which it is applied either under gravity or under the forces generated inside a tire during inflated running.

### DISCLOSURE OF INVENTION

The subject of the present invention is a method for producing a compound for a tyre sealant layer; said method being characterized by the fact that it comprises a swelling step, in which crumb rubber is immersed in a process oil chosen among the ones belonging to the families of paraffin process oils, naphthene process oils or natural process oils, so as to obtain a crumb rubber that swells due to the absorption of the process oil; and a following mixing step, during which said swollen crumb rubber is mixed with at least one polymer base consisting of an essentially saturated polymer.

Here and below by "essentially saturated polymer" we mean a polymer produced with less than 15% in moles of diene monomers.

Preferably, said process oil is selected from TDAE and RAE. Preferably, said swollen crumb rubber constitutes at least 5%, more preferably at least 30%, by weight of the overall reinforcing filler of the compound for sealant layer; said overall reinforcing filler being present in the compound in a quantity of between 3 and 50 phr.

Preferably, said swelling step is carried out at a temperature ranging from 50 to 200°C.

Preferably, said crumb rubber has a size ranging from 40 to 200 mesh.

Preferably, said polymer base consisting of an essentially saturated polymer is a halobutyl and/or butyl rubber.

A further subject of the present invention is a compound for sealant layer obtained with the method of the present invention.

A further subject of the present invention is a sealant layer obtained with the above compound.

A last subject of the present invention is a tyre comprising the above sealant layer.

### BEST MODE FOR CARRYING OUT THE INVENTION

Some embodiment examples are given below for purely illustrative non-limiting purposes.

Three compounds for sealant layers were produced, the first two of which (A and B) are comparison examples while the third (C) is an example of the invention.

In particular, the comparison compound A represents a compound generally used to produce a sealant layer, while the compound of comparison B differs from compound A in that the carbon black has been completely replaced with crumb rubber not swollen with process oil.

The compound of the invention C differs from compound A in that the carbon black has been completely replaced with crumb rubber swollen with process oil according to the method of the present invention.

Table I shows the compositions in phr of the three compounds.

**TABLE I**

| | A | B | C |
|---|---|---|---|
| Br-IIR | 100 | | |
| Liquid p-butene | 350 | | |
| Carbon black | 20 | -- | -- |
| Non-swollen crumb rubber | -- | 20 | -- |
| Crumb rubber swollen with TDAE | -- | -- | 20 |

| | | | |
|---|---|---|---|
| Br-IIR stands for bromobutyl rubber. | | | |

The procedure both for the swelling step and the mixing step is described below.

### - Activation step (only for compound C) -

Non-swollen crumb rubber was kept immersed in TDAE oil at a temperature of 130°C for 240 min. In this way swollen crumb rubber was obtained by absorption of the oil.

### - Mixing step -

-

The ingredients reported in Table I were mixed together and kept under stirring at a temperature of 100°C for 10 min.

From each of the compounds produced as described above, a sealant layer was produced, which then underwent a pressure retention test following puncturing of the tyre on which it was applied. In particular, the pressure retention tests were performed both with the tyre at a standstill and with the tyre in rotation (20 Hz).

The test was performed on tyres on which a respective sealant layer produced with a respective compound A-C was applied, in the same conditions. Specifically, the sealant layer is extruded directly on the surface of the inner cavity of the tyre.

The tyres, after being inflated with the same internal pressure, were subjected to the same puncturing conditions with subsequent removal of the object used for the puncturing. For each of the tyres subjected to the test, pressure retention 24h after puncturing (and subsequent removal of the object) was evaluated.

Table II shows the air retention evaluations expressed in a form indexed to the result obtained with the compound A both with the tyre at a standstill (static conditions) and with the tyre in rotation (20 Hz) (dynamic conditions). The higher the indexed value, the better the pressure retention.

**TABLE II**

| | A | B | C |
|---|---|---|---|
| Pressure retention in static conditions | 100 | 105 | 120 |
| Pressure retention in dynamic conditions | 100 | 110 | 125 |

As can be seen from the results of Table II, the sealant layer produced with the compound subject of the present invention is able to guarantee a considerably higher pressure retention than that of the sealant layers produced with the comparison compounds in both static and dynamic conditions.

In particular, the comparison example B shows that it is not only the presence of crumb rubber that gives the sealant layer greater effectiveness, but that the crumb rubber must be used in its swollen form due to the absorption of process oil.

The inventors have ascertained that the swollen crumb rubber performs the function of releasing process oil at the point in which the sealant layer is subjected to a deformation, for example a puncturing action. In this way, the release of process oil locally improves the visco-elastic characteristics of the sealant layer allowing the same to improve the effectiveness of the sealing action.

In other words, the crumb rubber performs the function of support with localized release of a liquid adapted to improve the performance of the sealant layer in the event of puncturing of the tyre.

In said regard it is important to highlight the choice of the process oil as the liquid used to swell the crumb rubber and to be released by the latter as defined above. The process oil is an essential element of the present invention as it has characteristics such as to act as a plasticizer, to interact with the crumb rubber to be incorporated therein, not to react with the polymer base and to be stable at the tyre operating temperatures.

Lastly, it should be underlined that the present invention also offers an environmental advantage as it entails the use of a waste material (crumb rubber) which would otherwise constitute a source of pollution and would involve a cost for the disposal thereof.

## Claims

1. A method to produce a compound for a tyre sealant layer; said method being **characterized in that** it comprises a swelling step, during which a crumb rubber is immersed in a process oil chosen among the ones belonging to the families of paraffin process oils, naphthene process oils or natural process oils, so as to obtain a crumb rubber that swells due to the absorption of said process oil; and a following mixing step, during which said swollen crumb rubber is mixed with at least one polymer base consisting of an essentially saturated polymer.

2. A method according to claim 1, **characterized in that** said process oil is chosen from TDAE and RAE.

3. A method according to claim 1 or 2, **characterized in that** said swollen crumb rubber makes up at least 5% by weight of overall reinforcing filler of the compound for sealant layers; said overall reinforcing filler being available in the compound in a quantity ranging from 3 to 50 phr.

4. A method according to claim 3, **characterized in that** said swollen crumb rubber makes up at least 30% by weight of the overall reinforcing filler of the compound for sealant layers.

5. A method according to one of the previous claims, **characterized in that** said swelling step is carried out at a temperature ranging from 50 to 200°C.

6. A method according to one of the previous claims, **characterized in that** said crumb rubber has a size ranging from 40 to 200 mesh.

7. A method according to one of the preceding claims, **characterized in that** said polymer base consisting of an essentially saturated polymer is a halobutyl and/or butyl rubber.

8. A compound for tyre sealant layers obtained with the method according to one of the previous claims.

9. A tyre sealant layer obtained with the compound according to claim 8.

10. A tyre comprising a sealant layer according to claim 9.

## Patentansprüche

1. Verfahren zur Herstellung einer Mischung für eine Reifendichtmittelschicht; wobei das Verfahren **dadurch gekennzeichnet ist, dass** es einen Quellschritt umfasst, während dem ein Krumengummi in ein Prozessöl eingetaucht wird, ausgewählt unter denjenigen, die zu den Familien von Paraffinprozessölen, Naphthenprozessölen oder natürlichen Prozessölen gehören, um einen Krumengummi zu erhalten, der aufgrund der Absorption des Prozessöls quillt; und einen folgenden Mischschritt, während dem der gequollene Krumengummi mit mindestens einer Polymerbasis gemischt wird, die aus einem im Wesentlichen gesättigten Polymer besteht.

2. Verfahren nach Anspruch 1, **dadurch gekennzeichnet, dass** das Prozessöl aus TDAE und RAE ausgewählt wird.

3. Verfahren nach Anspruch 1 oder 2, **dadurch gekennzeichnet, dass** der geschwollene Krumengummi mindestens 5 Gew.-% des Gesamtverstärkungsfüllstoffs der Mischung für Dichtmittelschichten ausmacht; wobei der gesamte verstärkende Füllstoff in der Mischung in einer Menge im Bereich von 3 bis 50 phr verfügbar ist.

4. Verfahren nach Anspruch 3, **dadurch gekennzeichnet, dass** der gequollene Krumengummi mindestens 30 Gew.-% des gesamten verstärkenden Füllstoffs der Mischung für Dichtmittelschichten ausmacht.

5. Verfahren nach einem der vorstehenden Ansprüche, **dadurch gekennzeichnet, dass** der Quellschritt bei einer Temperatur im Bereich von 50 bis 200 °C durchgeführt wird.

6. Verfahren nach einem der vorstehenden Ansprüche, **dadurch gekennzeichnet, dass** der Krumengummi eine Größe im Bereich von 40 bis 200 Mesh aufweist.

7. Verfahren nach einem der vorstehenden Ansprüche, **dadurch gekennzeichnet, dass** die aus einem im Wesentlichen gesättigten Polymer bestehende Polymerbasis ein Halogenbutyl- und/oder Butylgummi ist.

8. Mischung für Reifendichtmittelschichten, die mit dem Verfahren nach einem der vorstehenden Ansprüche erhalten wurde.

9. Reifendichtmittelschicht, erhalten mit der Mischung nach Anspruch 8.

10. Reifen, umfassend eine Dichtmittelschicht nach Anspruch 9.

## Revendications

1. Procédé pour produire un composé pour une couche d'étanchéité de pneu ; ledit procédé étant **caractérisé en ce qu'**il comprend une étape de gonflement, pendant laquelle un caoutchouc granulaire est immergé dans une huile de traitement choisie parmi celles appartenant aux familles d'huiles de traitement de paraffine, huiles de traitement de naphtène ou huiles de traitement naturelles, de façon à obtenir un caoutchouc granulaire qui gonfle du fait de l'absorption de ladite huile de traitement ; et une étape de mélange ultérieure, pendant laquelle ledit caoutchouc granulaire gonflé est mélangé à au moins une base polymère constituée d'un polymère sensiblement saturé.

2. Procédé selon la revendication 1, **caractérisé en ce que** ladite huile de traitement est choisie parmi TDAE et RAE.

3. Procédé selon la revendication 1 ou 2, **caractérisé en ce que** ledit caoutchouc granulaire gonflé représente au moins 5 % en poids de la charge renforçante globale du composé pour couches d'étanchéité ; ladite charge renforçante globale étant disponible dans le composé en une quantité allant de 3 à 50 pcc.

4. Procédé selon la revendication 3, **caractérisé en ce que** ledit caoutchouc granulaire gonflé représente au moins 30 % en poids de la charge renforçante globale du composé pour couches d'étanchéité.

5. Procédé selon l'une des revendications précédentes, **caractérisé en ce que** ladite étape de gonflement est effectuée à une température allant de 50 à 200 °C.

6. Procédé selon l'une des revendications précédentes, **caractérisé en ce que** ledit caoutchouc granulaire a une taille allant de 40 à 200 mesh.

7. Procédé selon l'une des revendications précédentes, **caractérisé en ce que** ladite base polymère constituée d'un polymère sensiblement saturé est du caoutchouc halobutyle et/ou butyle.

8. Composé pour couches d'étanchéité de pneu obtenu avec le procédé selon l'une des revendications précédentes.

9. Couche d'étanchéité de pneu obtenue avec le composé selon la revendication 8.

10. Pneu comprenant une couche d'étanchéité selon la revendication 9.
